# EUROPEAN PATENT SPECIFICATION

(11) **EP 0 927 702 B1**
(45) Date of publication and mention of the grant of the patent: **13.08.2003**
(21) Application number: 98310165.0
(22) Date of filing: 11.12.1998
(51) Int. Cl.: C02F 3/06, C02F 3/34, C02F 11/00, C12N 1/04, A62D 3/00

(54) **Method for safe disposal of oil contaminated filter media**
Verfahren zur sicheren Entsorgung von mit Öl kontaminiertem Filtermaterial
Méthode pour l'élimination sûre de matériaux filtrants contaminés d'huile

(30) Priority: 17.12.1997 US 992510; 17.12.1997 US 992511; 17.12.1997 US 992693
(43) Date of publication of application: 07.07.1999
(73) Proprietor: DANA CORPORATION, Toledo, OH 43615 (US)
(72) Inventor: Lasky, William M., Toledo, Ohio 43615 (US); Cornwell, James H., Williamsburg Virginia 23185 (US)
(74) Representative: Giles, Ashley Simon

(56) References cited:
- WO-A-93/25480
- US-A- 3 843 517
- US-A- 5 039 414
- US-A- 5 716 840
- US-A- 5 817 504

## Description

### Summary of the Invention

The present invention seeks to provide compositions and methods which will facilitate safe disposal of oil contaminated filter media and preferably an accelerated decomposition of the petroleum products within the filter media, most preferably by natural biological decomposition.

The present invention also seeks to provide a method for the safe disposal of oil contaminated filter media which meets or exceeds current environmental regulations for disposal of such contaminated materials and which also provides a positive environmental impact.

The present invention also seeks to provide a simple apparatus (kits) for treating contaminated filter media and filter housings to prevent the escape of petroleum and petro-chemical based contaminants therefrom for safe disposal.

Upon further study of the specification and appended claims, further objects and advantages of this invention will become apparatus to those skilled in the art.

According to the present invention, there is provided a method for treating filtration components as claimed in claim 1.

The amount of water used rehydrates the freeze-dried substrate and the freeze-dried microorganisms so as to activate the freeze-dried microorganisms, and provides a source of oxygen for the activated microorganisms to digest petroleum and petro-chemical based compounds entrained within the filtration components. Preferably at least 40 ml water is added per gram of dormant bio-oxidizing medium used. The filtration component is then sealed to retain the petroleum, petro-chemical based compounds, bio-oxidizing medium and water therein so as not to escape into the environment. In preferred embodiments, at least 25%, most preferably at least 90%, of the entrained petroleum and petro-chemical based compounds are digested by the microorganisms.

The method of this invention finds wide use in decomposing petroleum and petro-chemical based compounds in many environments.

The "petro-chemical based compounds" referred to herein include aromatic hydrocarbons such as toluene and xylene, cresol, nitroaromatics, polychlorinated biphenols, greases, chlorinated aliphatics and aromatics and lipids.

The "filtration components" referred to herein include filter media, filter elements, filter housings and combinations thereof. Suitable filter media include those prepared from conventional materials using a conventional configuration such as a corrugated absorbent paper. Preferably, the filter media are within a filter housing. The filtration components are treated to prevent the escape of petroleum and petro-chemical based compounds entrained therein from escaping into the environment.

The method of this invention can use a variety of active ingredients within the enzymatic oxidizing medium or the bio-oxidizing medium which decompose petroleum and petro-chemical based compounds. For example, bacteria conventionally known to digest petroleum compounds can be used as an active ingredient of the bio-oxidizing medium or enzymatic oxidizing medium. There are several forms of *bacillus* which can be successfully colonized upon filter media with petroleum contaminants. Bacteria which grow rapidly and digest petroleum provide advantage in that colonization serves to increase the activity of the bio-oxidizing medium allowing adjustment to the level of contaminants within the filtration components.

The enzymatic oxidizing medium, as defined herein, additionally contains catalytic enzymes which dehydrogenate petroleum and petro-chemical based compounds. Examples of the suitable catalytic enzymes may be obtained from extractions of petroleum digesting bacteria listed above.

The petroleum and petro-chemical based compounds within contaminated oil filters are sometimes complex and, as such, combinations of bacteria with or without enzymes can be effective in providing full degradation of the compounds to CO₂ and water. An example is the combination of *bacillus, licehniformis* (BAS50) and *pseudomonas denitrificans* used together with a dehydrogenase enzyme that serves as a catalyst for the removal of hydrogen atoms to assist in the decomposition and digestion of the petroleum compounds by the bacterium.

The amount of active ingredient used is dependent on the type deployed and the level of contamination in the filtration components (filter media and/or filter housing). The active ingredient is used with a carrier such as a solid substrate or liquid. For example, the petroleum digesting bacteria can be maintained in a liquid nutrient medium. Alternatively, a protein food source and a specific oil digesting bacteria can both be deposited on a solid substrate, enabling colonization upon the boundary of the substrate layers.

The rate and extent of decomposition by the type of microorganisms that is deployed for digestion of the petroleum compounds are, of course, important selection criteria; however, it is also desirable that the microorganism used can lie in a dormant or semi-starved state until exposed to petroleum material. This is required for complete digestion of the petroleum material to take place.

The microorganisms used are freeze-dried and lie in a dormant state until exposed to water and petroleum material. The organisms are sufficiently dormant such that a nutrient medium need not be packaged with the microorganism. The freeze-dried microorganisms of the dormant bio-oxidizing medium are used with a substrate which is also freeze-dried. The microorganisms are preferably freeze-dried simultaneously with the substrate while supported thereon. A nutrient medium for the microorganism, i.e., such as corn syrup, agar or other protein food source, is preferably used as the substrate for the microorganism and may form a crystalline structure. These materials can readily be freeze-dried with the microorganisms supported thereon. These embodiments enable accelerated colonization upon rehydration due to the proximity of the nutrient source to the petroleum digesting bacteria.

The bio-oxidizing medium preferably contains a sufficient amount of freeze-dried nutrient to sustain the resuscitated microorganisms for at least one day in the absence of petroleum or petro-chemical based components. The amount of nutrient is preferably at least 0.1 gms per 10⁷ CFU (colony forming units) of microorganism.

Also of particular importance is the ability to activate/resuscitate the dormant freeze-dried microorganisms simply and easily by the addition of water. The addition of water will not only rehydrate freeze-dried microorganisms and substrates to initiate growth and digestion of petroleum and petro-chemical based compounds, it will also provide sufficient oxygen to sustain the microorganisms while digesting the petroleum and petro-chemical based compounds. Water is preferably used in an amount that forms a ratio of water to bio-oxidizing medium of at least 40 ml per gram of bio-oxidizing medium. Where the substrate comprises freeze-dried nutrients in crystalline form, the microorganisms have immediate access to the rehydrated nutrients, which enhances the number of viable microorganisms. Providing a concentrated bio-oxidizing medium with a large number of colony forming units will also increase the number of viable microorganisms. It is preferable to provide at least 10⁵ CFU of the microorganisms per gram of bio-oxidizing medium.

The substrate may include other components that assist in sustaining the microorganisms such as an oxygen source, i.e., methyl cellulose and titanium dioxide. Titanium dioxide is extremely photosensitive and, therefore, readily reacts in the presence of sunlight. Photon energy adsorbed onto the titanium dioxide layer induces oxygen to attach to the oil or petroleum based materials which facilitates and accelerates the oxidation of the oil compounds. Where the bio-oxidizing medium will not be exposed to light when digesting the petroleum compounds, TiO₂ will have little value.

Other substrate components used in this invention are those which rehydrate in the presence of petroleum or petro-chemical based compounds and water. Suitable compounds fall within the group of polysaccharides, particularly celluloses or derivatives thereof derived from plant fibers.

The dormant enzymatic oxidizing media and bio-oxidizing media are preferably housed inside of a sealed container such as a polyurethane bag, a gelatin capsule, or similar enclosure, that is sufficiently sealed to prevent the introduction of moisture or oxygen present in ambient air so as to remain dormant. Where the container will dissolve in water at ambient temperature, such as a gelatin capsule, it need not be opened for use. Additionally, where a photoinitiator is present, the polyurethane liner must be constructed of an opaque material to prevent premature photoactivation and, as in the case of TiO₂ initiators, subsequent oxygenation of the substrate. Without this opaque shielding, premature photoactivation would result in untimely resuscitation of dormant bacterium upon the boundaries of the substrate. Without petroleum compounds available, sustainable life of the bacterium and subsequent digestion and biomass generation of the bacterium on the expended filter media cannot occur.

It is often desirable to treat the substrate with the following components: a biosurfactant, glucose, a NaNO₃ solution and a NaCl solution for certain embodiments. Such biofilms can actively function and be sustained in environments where the pH is between 4.6 to 9.0. In certain embodiments, the substrate is treated with sufficient amounts of active ingredients to form a biosphere environment capable of sustaining the bacteria in a repressive state which can be resuscitated by photocatalytic means or by the addition of water.

Dormant bacteria are preferably cultured onto the substrate at a rate of between 1,500-2,100 colony count per cm² and above. A CFU of above 10⁷ can be achieved with freeze-dried colonies. It should be noted that this is the initial bacterium implant count not the colony count of the bacterium after exposure to the expended filter medium. The growth count is dependent on the amount of the petroleum and petro-chemical based contaminants within the filter media as well as the amount of water and pH of the petroleum and petro-chemical based contaminants at the time of introduction. In the case of activation by photoinitiation, the magnitude and the duration of the photon energy applied to the photoinitiator will also effect the growth rate.

In preferred embodiments, the bacteria are cultured on the substrate in solution to provide at least 10⁵ CFU (colony forming units) in solution. The microorganisms and substrate are then isolated by conventional techniques, such as centrifugation as described in "Molecular Cloning," 2^{nd} Ed. Cold Spring Harbor Press (1989) p. 1.77. The recovered microorganisms and substrate are then freeze-dried by conventional techniques, preferably with the use of liquid nitrogen.

The bio-oxidizing medium is preferably used in amounts of from about 15 wt.% to 30 wt.% of the contemplated, entrained petroleum and/or petro-chemical based compounds. For oil filters used in conventional automobile engines, the bio-oxidizing medium is typically used in an amount of from about 0.5 gm- 2.0 gm. In preferred embodiments, the bio-oxidizing media are contained within gelatine capsules of less than 1.5 gms. These bio-oxidizing media typically have about 10⁵ - 10¹² CFU of the microorganisms and require at least 40 ml of added water to generate and sustain a hydrocatalytic reaction which causes the bio-oxidizing media to digest the petroleum and petro-chemical based compounds.

In certain embodiments, it may be desirable to also add to the filtration components a coagulant, thickening agent and/or polymer absorbent to prevent the escape of petroleum and petro-chemical based compounds into the environment. Initiators may also be added to aid activation and growth of the microorganisms. The thickeners are selected from a wide variety of compounds capable of absorbing petroleum and petro-chemical based compounds. The thickeners encompass both natural and synthetic compounds and in addition to kaolinite and magnesia include the families of the pillared clays, Fuller's earth, aluminas, starches, cellulose and granulated paper products such as paper pulp extracts and all forms of starches, haloysite, illite, montmorillonite. These thickeners are essentially carbonaceous compounds and can be used in amounts within a wide range since excess amounts are not significantly deleterious. Amounts of about 1-100 wt.% thickener based on the entrained petroleum and petro-chemical based compounds are effective.

The coagulants used in embodiments of this invention are those which form a solid or gel with petroleum or petro-chemical based compounds in the presence of water. These coagulants must have covalently bonded hydrogen atoms so that hydrogen bonding can occur with the hydrocarbons found within the petroleum and petro-chemical based compounds. These coagulants are preferably carbon-based compounds having at least two covalently bonded hydrogen atoms to carbon, preferably a methyl group. Suitable compounds fall within the group of polysaccharides, particularly celluloses or derivatives thereof derived from plant fibers. The preferred coagulants comprise methylcelluloses, most preferably natural methyl cellulose and derivatives thereof. Such compounds have been found to provide sufficient hydrogen bonding so as to be activated at ambient temperature upon the addition of water, allowing solubilization and formation of hydrogen bonds with the hydrocarbons present within the petroleum and petro-chemical based compounds. Common derivatives of methylcellulose include carboxymethylcellulose, hydroxypropylmethylcellulose, hydroxyethylmethylcellulose and methylcellulose ethers.

The coagulants such as the methylcellulose or derivatives thereof are preferably used in amounts of from about 15 wt.% to 30 wt.% of the contemplated, entrained petroleum and petro-chemical based compounds. Water is typically used in an amount that forms a ratio of water to coagulant in the range of 0.5:1 to 2:1. The coagulants are typically used in an amount of about 1 fluid ounce with oil filters for conventional automobile engines. Water is typically added at volume of about 2 fluid ounces to generate a hydrocatalytic reaction which causes the oil to congeal into a solid mass.

In certain embodiments, it may be desirable to dope the treated filter medium with thickener agents such as magnesia and kaolinite. Employing up to 3 wt.% MgCa(CO₃) based on the weight of the entrained petro-chemical compounds is recommended but larger amounts can be used. Kaolinite (Al₂Si₂O₅(OH₄)₂) should be added in an amount up to 10% by weight of the entrained petro-chemical compounds but larger amounts can be used.

While the present invention is well suited for treatment of petroleum and petro-chemical based compounds within filtration components; it is not limited to such end uses. In preferred embodiments of this invention, the one or more microorganisms employed are obtained by selective pressure to consume the contaminants of interest. This is accomplished by growing a sample of the microorganism in a small amount of the contaminant, recovering the viable organisms and growing these organisms at higher concentrations of contaminant until microorganisms which grow in substantially undiluted contaminants, except for the added water, are obtained.

Means for retaining the petroleum and petro-chemical based compounds in the filtration components vary widely and comprise the use of a coagulant, thickener, absorbent or other gelling component which seals the contents of a filter housing. Other means also comprise distorting a filter housing such as by crimping inlets and outlets or crushing the filter housing itself.

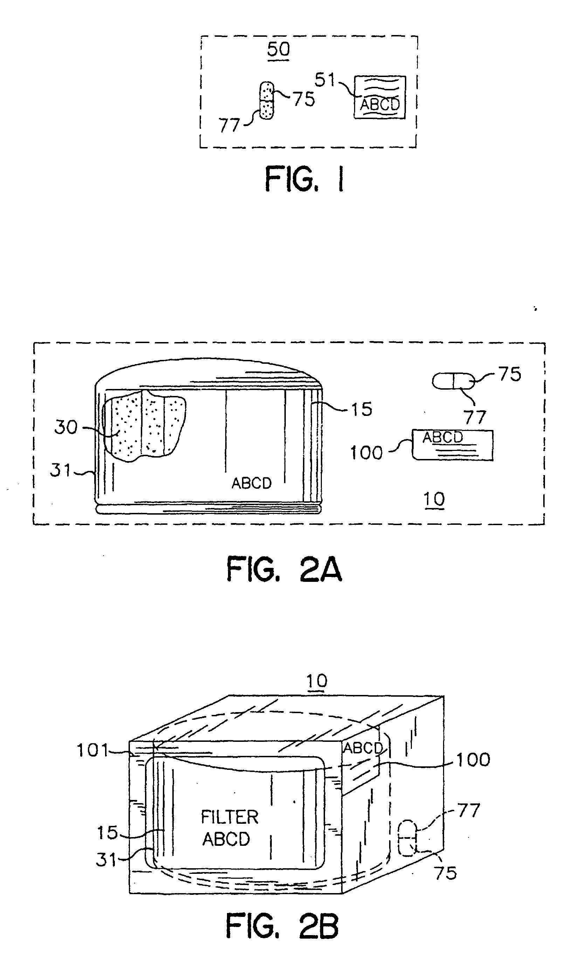

Figure 1 illustrates a kit 50. Kit 50 comprises a written protocol 51 which identifies at least one filtration component for which the kit is suitable and identifies a bio-oxidizing medium/enzymatic oxidizing medium 75 of the kit as a component to be added to an identified filtration component which is contaminated with petroleum and/or petro-chemical based components. Written protocol 51 is shown as a separate component but maybe integrated into other optional components, such as a side panel of a box for a replacement filter. Bio-oxidizing medium/enzymatic oxidizing medium 75 is shown within container 77 which is preferably a water soluble gelatine capsule.

Written protocol 51 also specifies a minimum amount of water to be added to the contaminated filtration component to which the trio-oxidizing medium/enzymatic oxidizing medium 75 has been added. Such an amount may be specified with instructions to "fill" the filtration component, such as a filter housing with water. The written protocol also will indicate that the expended filtration component with bio-oxidizing medium and water added thereto be sealed to retain the petroleum, petro-chemical based compounds, added water and added bio-oxidizing medium therein. In preferred embodiments, the written protocol will identify a seal for the expended filtration component or other means for retaining the petroleum, petro-chemical based compounds, added water and added bio-oxidizing medium within the filtration component.

Written protocol 51 can have other indications, depending on the contents of bio-oxidizing medium/enzymatic oxidizing medium 75, and can comprise more than one writing. Bio-oxidizing medium/enzymatic oxidizing medium 75 can be placed in more than one container and the components thereof can be placed in separate containers. For example, a portion of the nutrient medium can be incorporated in a separate container, although not preferred.

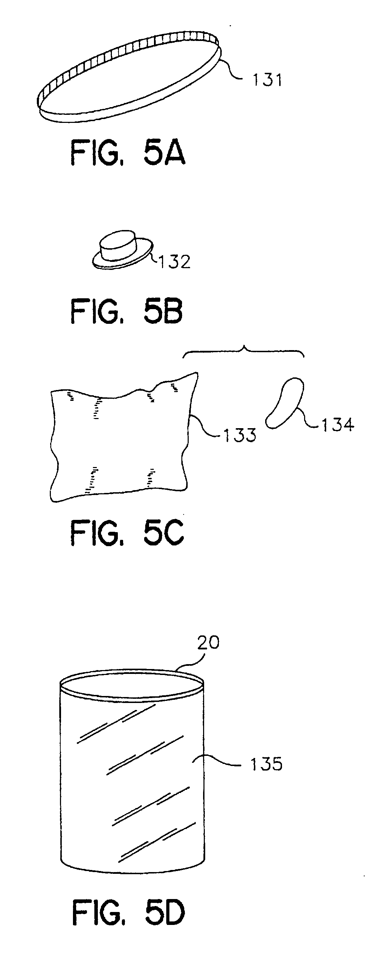

Kit 50 may also include other components such as a seal for the filter housing such as an end cap 131, shown in Figure 5a, plug 132, shown in Figure 5b, or film 133 with elastomeric band 134, shown in Figure 5c. Alternatively, the kit may include a sealable bag 135 with seal 20, shown in Figure 5d to house the filtration component or the kit may include a thickener and/or coagulant to be added to the filtration component which prevents the escape of petroleum by forming a gel.

Figure 2a illustrates a kit 10 which is another embodiment of the present invention. Kit 10 comprises a replacement filter component 15 with filter media 30 and filter housing 31. Also included in kit 10 is bio-oxidizing medium/enzymatic oxidizing medium 75, as defined above, shown in a gelatine capsule 77. Kit 10 further includes written protocol 100 which, at a minimum, identifies the filtration components for which the kit is suitable, identifies bio-oxidizing medium/enzymatic oxidizing medium75 as a component to be added to an identified filtration component which is contaminated, specifies an amount of water to be added to the filtration component to which the bio-oxidizing medium/enzymatic oxidizing medium is added and indicates the filtration components be sealed to prevent the escape of petroleum and petro-chemical based components from the filtration component to the environment. The components of these kits may be separately packaged, transported and/or stored. The amount of water specified can be a simple instruction to fill a filter housing with water.

Figure 2b illustrates an alternative configuration for kit 10, wherein written protocol 100 appears on a package 101 for the replacement filter 15 and bio-oxidizing medium/enzymatic oxidizing medium 75 in gelatin capsule 77.

Figures 3a and 3b illustrate kits 20 and 30 of this invention, respectively, wherein a seal for a filter housing is provided. In Figure 3a, the seal comprises film 133 and elastomeric band 134. Written protocol 51 appears on film 133. In Figure 3b, the seal comprises end cap 131 with written protocol 51 appearing thereon.

Figure 4 illustrates end cap 136 as a seal, which is integrated with package 101 for a replacement filter. Written protocol 51 appears on package 101.

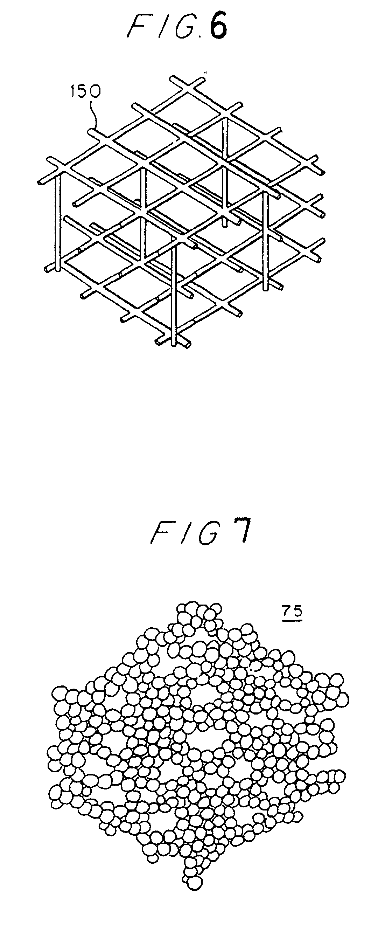

A bio-oxidizing medium/enzymatic oxidizing medium useful as composition 75 can be prepared by treatment of a cellulose substrate 150, as shown in Figure 6, with an aqueous glucose solution (5%). This solution is mechanically applied (spraying, dipping) and is allowed to dry typically at 50°C for a period of between ten to twelve minutes after which the substrate is typically further coated with a second layer of a solution containing 0.2% NaNO₃ by the method and means previously mentioned for the glucose coating. This substrate 150 can function as a coagulant.

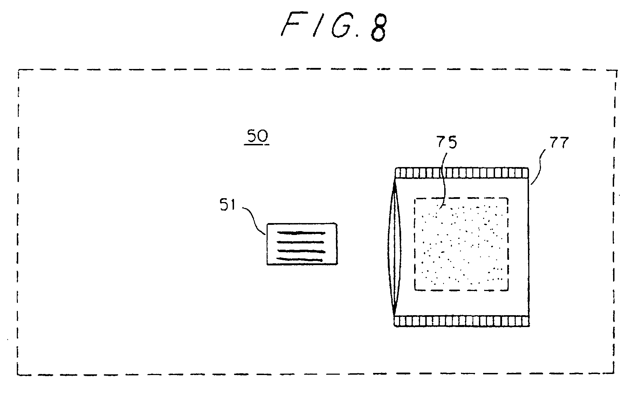

After the second coating, the substrate 150 is typically dried under the conditions previously mentioned for the glucose coating. Typically, a third coating is also applied from an aqueous solution containing 5% NaCl in the same manner as the glucose and NaNO₃ coatings. For such embodiments it is desirable to obtain a pH factor on such a substrate of between 4.8 and 5.2. Bacteria colonies and optionally enzymes typically can now be applied to the surface of the substrate 150, preferably in an amount sufficient to obtain a colony count of between 1,500 and 2,100 colonies per cm². The substrate 150 with bacteria colonies is shown in Figure 7 as bio-oxidizing medium/enzyme oxidizing medium 75.

Figure 8 illustrates another kit 50 of this invention comprising written protocol 51 and bio-oxidizing medium/enzyme oxidizing medium 75 of Figure 7, within container 77, that includes substrate 150 (not shown) which function as a coagulant.

Preferred methods of this invention for treating filtration components with petroleum and petro-chemical based compounds entrained therein comprises exposing filter media having petroleum and petro-chemical based compounds entrained therein to a dormant bio-oxidizing medium as described above and an amount of water which rehydrates the freeze-dried microorganisms and freeze-dried nutrient substrate, preferably crystalline, and provides a source of oxygen for the activated microorganism to digest the petroleum and petro-chemical based compounds within the filtration components. The filtration component is then sealed to retain the petroleum, petro-chemical based compound, bio-oxidizing medium and water therein so as not to escape into the environment. Where a coagulant is present, additional water may be necessary to form a solid or gel with the petroleum and/or petro-chemical based contaminants within the filtration component. It may be necessary to disperse the bio-oxidizing medium, coagulant, water and residual oil by agitation.

Other methods of this invention for decomposing petroleum and petro-chemical based compounds within filtration components comprises exposing filter media having petroleum and petro-chemical based compounds to a coagulant as defined above and a bio-oxidizing medium or an enzymatic oxidizing medium with an active ingredient selected from petroleum digesting bacteria, catalytic enzymes for dehydrogenating hydrocarbons and combinations thereof, which oxidizes the petroleum and petro-chemical based compounds within said filtration components, preferably to CO₂ and water. The filtration component is further exposed to an amount of water sufficient for the coagulant to form a solid or gel with petroleum and/or petro-chemical based contaminants within the filtration component and to activate the bio-oxidizing medium or enzymatic oxidizing medium to initiate decomposition. The filtration component is then preferably maintained under conditions wherein the bio-oxidizing medium or enzymatic oxidizing medium oxidizes the petroleum and petrochemical based compounds, preferably to CO₂ and water. It may be necessary to disperse the bio-oxidizing medium/enzymatic oxidizing medium, coagulant, water and residual oil by agitation.

With microorganisms, petroleum digestion commences upon contact or exposure of the contaminants to the microorganisms and water. The added water activates the bio-oxidizing medium and provides oxygen for the microorganism. Preferably, the water within the sealed container will provide sufficient oxygen to sustain the petroleum digesting bacteria until the petroleum and petro-chemical based compounds are oxidized to CO₂ and water. These biochemical reactions and reproduction cycles preferably continue until the filter medium approaches an equilibrium meaning that all of the petroleum products and nutrients have been digested and decomposed by the bacteria and there is no longer a sufficient food source to sustain the life of the petroleum digesting bacteria. In preferred embodiments, the filter media is digested as well.

### Examples

An analysis of the biodegradability of a sample of waste oil with a dehydrated bacterial culture is performed as follows:

The chemical oxygen demand (COD) of a sample (0.010 mls) of waste oil is first determined to approximate the extent of oxidation necessary to consume all of the waste oil. The COD analysis is performed per Standard Methods 18th ed. Method 5220D "Closed Reflux Colorimetric Method." The waste oil samples (0.010 mls) are dissolved in 0.10 mls of chloroform and diluted to 10 mls with deionized water. A blank is prepared with 0.10 mls of chloroform and diluted to 10 mls with deionized water. Six replicants are set up, the low and high values dropped, and the remaining four values averaged to obtain an average COD of 1,397,600 mg/l. std. dev. 235,327 mg/l.

The biological oxygen demand (BOD) of waste oil samples seeded with dehydrated bacteria culture is determined as follows. A sample of waste oil (0.010 mls) is pipetted onto the side of a 300 ml BOD bottle and swirled to disperse along the side. Dilution water was prepared according to OECD Guidelines Method 301b and added to the bottles to approximately 3/4 full. Two mls of seed are pipetted directly onto the oil sample to ensure contact. The seed is prepared by dissolving 0.623 grams of a combination of dehydrated BAS 50 and pseudomonas denitrificans on dehydrated methyl cellulose and nutrient in 300 mls of deionized water and stirring for 1 hour prior to use. The BOD bottle is then filled to the neck with dilution water. The initial dissolved oxygen is taken and the bottle capped. The replicants are set up, the high and low values dropped and the remaining eight values averaged after 5 days, 15 days and 28 days. The average BOD values are reported in Table 1 below, and the % biodegradability values are determined from the average COD values.

Examples of values are reported in Table 1 below.

**Table 1**

| **Incubation** | **5 days** | **15 days** | **28 days** |
|---|---|---|---|
| Average BOD | 34,700 mg/L | 76,400 mg/L | 159,800 mg/L |
| Average COD | 1,397,600 mg/L | 1,397,600 mg/L | 1,397,600 mg/L |
| % Biodegradability | 2.5% | 5.5% | 11.4% |

The results show that the dehydrated bacteria on a freeze-dried substrate can be activated/resuscitated rapidly with the addition of water and will grow/digest in the presence of the waste oil.

### Brief Description of the Drawings

Various other features and attendant advantages of the present invention will be more fully appreciated as the same becomes better understood when considered in conjunction with the accompanying drawings, in which like reference characters designate the same or similar parts throughout the several views, and wherein:
**Figure 1** illustrates a kit of the present invention for treating petroleum and petro-chemical based compounds within filtration components;
**Figures 2a and 2b** illustrate another kit of the present invention for treating petroleum and petro-chemical based compounds within filtration components;

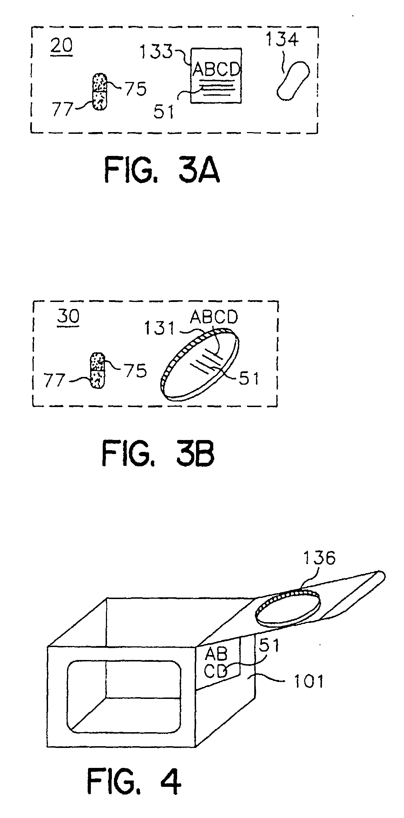

**Figures 3a and 3b** illustrate kits of the present invention with optional seals;
**Figure 4** illustrates a seal incorporated in the replacement filter packaging used in kits and methods of this invention;
**Figures 5a-5c** each illustrate a different seal for use in the kits and methods of this invention;
**Figure 5d** is a transparent bag which can be used in the kits and methods of this invention to prevent the escape of petroleum and petro-chemical based compounds into the environment;
**Figure 6** is a magnified illustration of a section of a substrate from which an enzymatic oxidizing medium is formed;
**Figure 7** is a magnified illustration of a section of a completed enzymatic oxidizing medium formed for the substrate of Figure 6 ; and
**Figure 8,** illustrates a kit of the present invention with an enzymatic oxidizing medium of Figure 7.

From the foregoing description, one skilled in the art can easily ascertain the essential characteristics of this invention, and without departing from the scope thereof, can make various changes and modifications of the invention to adapt it to various usages and conditions.

## Claims

1. A method for treating filtration components contaminated with petroleum and/or petro-chemical based compounds entrained therein which comprise exposing a filtration component contaminated with petroleum and petro-chemical based contaminants to a dormant bio-oxidizing medium (75) comprising freeze-dried microorganisms on a freeze-dried nutrient substrate (150), wherein said freeze-dried microorganisms digest petroleum and petro-chemical based compounds upon rehydration and wherein said freeze-dried nutrient substrate (150) and said freeze-dried microorganisms are freeze-dried simultaneously, **characterised by** the steps of:
a) exposing the filtration component and dormant bio-oxidising medium (75) to an amount of water which rehydrates the freeze-dried microorganisms and freeze-dried nutrient substrate (150) so as to activate the freeze-dried microorganisms, and provides a source of oxygen for the activated microorganism to digest petroleum and petro-chemical based compounds entrained within the filtration components, and
b) sealing the filtration component to retain the petroleum, petro-chemical based compounds, bio-oxidizing medium (75) and water therein so as not to escape into the environment.

2. A method as claimed in claim 1, **characterised in that** the freeze-dried nutrient substrate (150) is in an amount sufficient to sustain the microorganism once resuscitated for at least 1 day in the absence of petroleum or petro-chemical based compounds.

3. A method as claimed in claim 1, **characterised in that** the bio-oxidizing medium (75) additionally comprises a gel forming component selected from the group consisting of coagulants, thickeners, polymer absorbents and combinations thereof

4. A method as claimed in claim 1, **characterised in that** said dormant bio-oxidizing medium (75) comprises at least 10⁵ colony forming units of said microorganism per gram of said dormant bio-oxidizing medium (75).

5. A method as claimed in claim 1, **characterised in that** said bio-oxidizing medium (75) contains:
a) more than one strain of microorganism which digest petroleum and/or petro-chemical based compounds; and/or
b) catalytic enzymes which aid in oxidizing the petroleum and/or petro-chemical based compounds.

6. A method as claimed in claim 1, **characterised in that** the freeze-dried nutrients are in crystalline form.

7. A method as claimed in claim 1, **characterised in that** the amount of freeze-dried nutrients is at least 0.1 gms per 10⁷ CFU Colony Forming Units of microorganisms within said bio-oxidizing medium (75).

8. A method as claimed in claim 1, **characterised in that** the number of colony forming units (CFU) of microorganisms per gram of freeze-dried substrate (150) is at least 10⁶.

9. A method as claimed in claim 1, **characterised in that** the bio-oxidizing medium (75) additionally contains a source of oxygen for the microorganisms once activated.

10. A method as claimed in claim 1, **characterised in that** said bio-oxidizing medium (75) additionally comprises initiators which aid resuscitation of said petroleum digesting microorganisms before use.

11. A method as claimed in claim 1, **characterised by** the further step of:
exposing petroleum and petro-chemical based contaminants entrained within a filtration component to a coagulant with covalently bonded hydrogen atoms which forms a solid or gel with petroleum and petro-chemical based compounds in the presence of water at ambient temperature, and an amount of water sufficient to activate said coagulant to form a solid or gel with said petroleum or petro-chemical based compounds entrained within said filtration components.

12. A method as claimed in claim 11, wherein said coagulant is methyl cellulose or a derivative thereof and which additionally contains a thickener selected from pillared clays, kaolinite, magnesia, Fuller's Earth, aluminas, starches, cellulose and granulated paper products, haloysite, illite and montmorillonite.

## Patentansprüche

1. Verfahren zur Behandlung von Filtrationskomponenten, die mit darin anhaftendem Erdöl oder Verbindungen auf Erdölbasis kontaminiert sind, welches umfasst, dass eine Filtrationskomponente, die mit Erdöl oder Verunreinigungen auf Erdölbasis kontaminiert ist, mit einem ruhenden bio-oxidierenden Medium (75), das gefriergetrocknete Mikroorganismen auf einem gefriergetrockneten Nährstoffsubstrat (150) umfasst, zusammengebracht wird, wobei die gefriergetrockneten Mikroorganismen nach Rehydratation das Erdöl und die Verbindungen auf Erdölbasis auflösen, und wobei das gefriergetrocknete Nährstoffsubstrat (150) und die gefriergetrockneten Mikroorganismen gleichzeitig gefriergetrocknet werden, **gekennzeichnet durch** folgende Schritte:
a) Zusammenbringen der Filtrationskomponente und des ruhenden bio-oxidierenden Mediums (75) mit einer Menge an Wasser, die die gefriergetrockneten Mikroorganismen und das gefriergetrocknete Nährstoffsubstrat (150) rehydratisiert und so die gefriergetrockneten Mikroorganismen aktiviert, und die eine Sauerstoffquelle für die aktivierten Mikroorganismen zur Verfügung stellt, damit diese das in der Filtrationskomponente anhaftende Erdöl und die Verbindungen auf Erdölbasis auflösen, und
b) Versiegeln der Filtrationskomponente, um das Erdöl, die Verbindungen auf Erdölbasis, das bio-oxidierende Medium (75) und das Wasser darin zurückzuhalten, damit nichts in die Umwelt entweichen kann.

2. Verfahren nach Anspruch 1, **dadurch gekennzeichnet, dass** das gefriergetrocknete Nährstoffsubstrat (150) in einer Menge vorliegt, die ausreicht, die einmal wiederbelebten Mikroorganismen mindestens 1 Tag lang in Abwesenheit von Erdöl oder den Verbindungen auf Erdölbasis zu erhalten.

3. Verfahren nach Anspruch 1, **dadurch gekennzeichnet, dass** das bio-oxidierende Medium (75) zusätzlich eine gelbildende Komponente enthält, ausgewählt aus der Gruppe, die aus Flockungsmitteln, Verdickungsmitteln, Polymerabsorbentien und Kombinationen davon besteht

4. Verfahren nach Anspruch 1, **dadurch gekennzeichnet, dass** das ruhende bio-oxidierende Medium (75) mindestens 10⁵ koloniebildende Einheiten des Mikroorganismus pro Gramm des bio-oxidierenden Mediums (75) enthält.

5. Verfahren nach Anspruch 1, **dadurch gekennzeichnet, dass** das bio-oxidierende Medium (75)
a) mehr als einen Stamm von Mikroorganismen, die Erdöl und/oder Verbindungen auf Erdölbasis auflösen; und/oder
b) katalytische Enzyme, die bei der Oxidation des Erdöls und/oder der Verbindungen auf Erdölbasis mitwirken, enthält.

6. Verfahren nach Anspruch 1, **dadurch gekennzeichnet, dass** die gefriergetrockneten Nährstoffe in kristalliner Form vorliegen.

7. Verfahren nach Anspruch 1, **dadurch gekennzeichnet, dass** die Menge der gefriergetrockneten Nährstoffe mindestens 0,1 g pro 10⁷ CFU (Colony Forming Units = koloniebildende Einheiten) der Mikroorganismen im bio-oxidierenden Medium (75) beträgt.

8. Verfahren nach Anspruch 1, **dadurch gekennzeichnet, dass** die Zahl der koloniebildenden Einheiten (CFU) der Mikroorganismen pro Gramm des gefriergetrockneten Substrats (150) mindestens 10⁶ beträgt.

9. Verfahren nach Anspruch 1, **dadurch gekennzeichnet dass** das bio-oxidierende Medium (75) zusätzlich eine Sauerstoffquelle für die einmal aktivierten Mikroorganismen enthält.

10. Verfahren nach Anspruch 1, **dadurch gekennzeichnet, dass** das bio-oxidierende Medium (75) zusätzlich Initiatoren umfasst, die bei der Wiederbelebung der erdölauflösenden Mikroorganismen vor ihrer Verwendung mitwirken.

11. Verfahren nach Anspruch 1, **gekennzeichnet durch** den weiteren Schritt des
Zusammenbringens des Erdöls und der Verunreinigungen auf Erdölbasis, die in einer Filtrationskomponente anhaften, mit einem Flockungsmittel mit kovalent gebundenen Wasserstoffatomen, welches in Gegenwart von Wasser bei Raumtemperatur mit Erdöl oder Verbindungen auf Erdölbasis einen Feststoff oder ein Gel bildet, und mit einer ausreichenden Menge Wasser, um das Flockungsmittel zu aktivieren, damit es mit dem Erdöl oder den Verbindungen auf Erdölbasis, die in den Filtrationskomponenten anhaften, einen Feststoff oder ein Gel bildet

12. Verfahren nach Anspruch 11, worin das Flockungsmittel Methylcellulose oder ein Derivat davon ist, und zusätzlich ein Verdickungsmittel, ausgewählt aus Tonerden, Kaolinit, Magnesiumoxid, Fullererde, Aluminiumoxiden, Stärken, Cellulose und granulierten Papierprodukten, Haloysit, Illit und Montmorillonit, enthält.

## Revendications

1. Méthode pour le traitement de composants de filtration contaminés par du pétrole et/ou des composés de base pétrochimique qui y sont entraînés, qui comprennent l'exposition d'un composant de filtration contaminé de pétrole et de contaminants de base pétrochimique à un milieu bio-oxydant dormant (75) comprenant des micro-organismes lyophilisés sur un substrat nutritif lyophilisé (150), où lesdits micro-organismes lyophilisés digèrent le pétrole et les composés de base pétrochimique lors d'une réhydratation et où ledit substrat nutritif lyophilisé (150) et lesdits micro-organismes lyophilisés sont lyophilisés simultanément, **caractérisée par** les étapes de :
a) exposer le composant de filtration et le milieu bio-oxydant dormant (75) à une quantité d'eau qui réhydrate les micro-organismes lyophilisés et le substrat nutritif lyophilisé (150) afin d'activer les micro-organismes lyophilisés, et produit une source d'oxygène pour le micro-organisme activé pour digérer le pétrole et les composés de base pétrochimique entraînés dans les composants de filtration, et
b) sceller le composant de filtration pour retenir le pétrole, les composés de base pétrochimique, le milieu bio-oxydant (75) et l'eau afin qu'ils ne s'échappent pas vers l'environnement.

2. Méthode selon la revendication 1, **caractérisée en ce que** le substrat nutritif lyophilisé (150) est en une quantité suffisante pour maintenir le micro-organisme une fois ressuscité pendant au moins un jour en l'absence de pétrole ou de composés de base pétrochimique.

3. Méthode selon la revendication 1, **caractérisée en ce que** le milieu bio-oxydant (75) comprend additionnellement un composant formant un gel sélectionné dans le groupe consistant en coagulants, épaississants, absorbants polymères et leurs combinaisons.

4. Méthode selon la revendication 1, **caractérisée en ce que** ledit milieu bio-oxydant dormant (75) comprend au moins 10⁵ unités de formation de colonies dudit micro-organisme par gramme dudit milieu bio-oxydant dormant (75).

5. Méthode selon la revendication 1, **caractérisée en ce que** ledit milieu bio-oxydant dormant (75) contient :
a) plus d'une souche de micro-organisme qui digèrent du pétrole et/ou des composés de base pétrochimique ; et/ou
b) des enzymes catalytiques qui aident à l'oxydation du pétrole et/ou des composés de base pétrochimique.

6. Méthode selon la revendication 1, **caractérisée en ce que** les aliments lyophilisés sont sous forme cristalline.

7. Méthode selon la revendication 1, **caractérisée en ce que** la quantité d'aliments lyophilisés est d'au moins 0,1 g pour 10⁷ Unités de Formation de Colonies CFU des micro-organismes dans ledit milieu bio-oxydant (75).

8. Méthode selon la revendication 1, **caractérisée en ce que** le nombre d'unités de formation de colonies (CFU) des micro-organismes par gramme du substrat lyophilisé (150) est d'au moins 10⁶.

9. Méthode selon la revendication 1, **caractérisée en ce que** le milieu bio-oxydant (75) contient additionnellement une source d'oxygène pour les micro-organismes une fois activés.

10. Méthode selon la revendication 1, **caractérisée en ce que** ledit milieu bio-oxydant (75) comprend additionnellement des initiateurs qui aident à ressusciter lesdits micro-organismes digérant le pétrole avant utilisation.

11. Méthode selon la revendication 1, **caractérisée par** l'autre étape de :
exposer le pétrole et les contaminants de base pétrochimique entraînés dans un composant de filtration à un coagulant avec des atomes d'hydrogène liés de manière covalente qui forme un solide ou gel avec le pétrole et les composés de base pétrochimique en présence d'eau à température ambiante et une quantité d'eau suffisante pour activer ledit coagulant pour former un solide ou gel avec ledit pétrole ou lesdits composés de base pétrochimique entraînés dans lesdits composants de filtration.

12. Méthode selon la revendication 11, où ledit coagulant est la méthyl cellulose ou un dérivé de celle-ci et qui contient additionnellement un agent épaississant sélectionné parmi des argiles en colonnes, de la kaolinite, de la magnésie, de la Terre de Fuller, des alumines, des amidons, de la cellulose et des produits granulés de papier, de l'haloysite, de l'illite et de la montmorillonite.
